# EUROPÄISCHE PATENTSCHRIFT

(11) **EP 3 874 165 B1**
(45) Veröffentlichungstag und Bekanntmachung des Hinweises auf die Patenterteilung: **25.12.2024**
(21) Anmeldenummer: 19794925.8
(22) Anmeldetag: 21.10.2019
(51) Int. Cl.: F03D 17/00, F03D 80/00

(54) **WINDKRAFTANLAGENREGELUNG AUF BASIS VON SCHALLEMISSIONSMESSUNG DURCH DRUCKSENSOREN AN ROTORBLÄTTERN**
WIND TURBINE CONTROL BASED ON NOISE EMISSION MEASUREMENT USING PRESSURE SENSORS ON ROTOR BLADES
RÉGULATION D'ÉOLIENNE SUR LA BASE DE LA MESURE D'ÉMISSIONS SONORES AU MOYEN DE CAPTEURS DE PRESSION AU NIVEAU DE PALES DE ROTOR

(30) Priorität: 02.11.2018 DE 102018127415
(43) Veröffentlichungstag der Anmeldung: 08.09.2021
(73) Patentinhaber: VC VIII Polytech Holding ApS, 6740 Bramming (DK)
(72) Erfinder: VERA-TUDELA, Luis, 80804 München (DE); SCHMID, Markus, 80636 München (DE); KIMILLI, Onur, 81371 München (DE)
(74) Vertreter: Zacco Denmark A/S
(86) Internationale Anmeldenummer: PCT/EP2019/078572
(87) Internationale Veröffentlichungsnummer: WO 2020/088972

(56) Entgegenhaltungen:
- EP-A2- 2 772 643
- CN-A- 106 323 542
- DE-A1- 102016 100 522
- US-A1- 2009 097 976
- US-A1- 2017 191 464

## Beschreibung

### TECHNISCHES GEBIET

Die Anmeldung ist auf dem Gebiet der Windkraftanlagentechnik. Insbesondere offenbart die vorliegende Anmeldung Systeme und Methoden zur Messung mit Sensoren zur verbesserten Vorhersage und Auswertung von Windströmungen bezüglich Windenergieerzeugungssystemen.

### TECHNISCHER HINTERGRUND

Windkraftanlagen sind Winden mit unterschiedlichen Eigenschaften ausgesetzt, die aus unterschiedlichen Richtungen und mit unterschiedlicher Stärke insbesondere auf die Rotorblätter der Windkraftanlagen treffen. Bei diesen unterschiedlichen Windbedingungen wandeln die Windkraftanlagen kinetische Energie, die dem Wind entnommen wird, in elektrische Energie um und speist diese in ein Versorgungsnetz ein. Bei der Wandlung der Windenergie in elektrische Energie wird die Windkraftanlagen in Abhängigkeit der Windbedingungen und einer vorbestimmten einzuspeisenden elektrischen Leistung in verschiedenen Betriebspunkten betrieben, wobei jeder Betriebspunkt insbesondere durch einen Blatteinstellwinkel und ein einzustellendes Generatormoment bestimmt wird.

Ein Betriebspunkt wird hierbei möglichst ideal eingestellt, um einen effizienten Betrieb unter Berücksichtigung einer langen Lebensdauer und vermehrt auch unter Einhaltung geringer Betriebsgeräusche zu ermöglichen. Effizient bedeutet insbesondere eine möglichst hohe Energie aus dem zur Verfügung stehenden Wind zu generieren. Betriebsgeräusche, die vornehmlich durch Turbulenzen an den Rotorblättern entstehen sind hierbei insbesondere dann zu minimieren, wenn die Windenergieanlage im Bereich von Wohngebieten aufgestellt ist, so dass die Anwohner nicht von den Geräuschen der Rotorblätter der Windenergieanlage gestört werden.

Windkraftanlagen werden daher aufgrund von Einschränkungen verschiedener Art zu einem Großteil der Zeit nicht am physikalisch möglichen Limit der Leistungsgrenze betrieben.

Die Einschränkung in der Generierung von Energie durch eine Windkraftanlage ist unter anderem auf Limitierung des elektrischen Netzes, beispielsweise bei der Gefahr von Überlast durch ein Zuviel an eingespeister oder im Netz vorhandener Energie, Vogel- und Fledermausschutz, Schattenwurf, oder insbesondere durch Schallemission zurückzuführen.

Im Speziellen erfolgt die Limitierung der Leistungsabgabe von Windkraftanlagen durch Schallemission. Genauer gesagt erfolgt die Limitierung durch eine Steuerung der Windkraftanlage auf Basis der initial gemessenen Schallemission bei ihren jeweiligen Betriebsbedingungen. Hierbei wird die Anlage in vielen Fällen unnötig früh abgeschaltet, da die Steuerung eher konservativ ausgelegt ist, um die Schwellwerte nicht zu übersteigen. Zudem werden die Windrichtung und die Schallausbreitung nicht in Betracht gezogen, wodurch weitere unnötige Einschränkungen entstehen.

Es gibt verschiedene Ansätze die Schallemission der Windenergieanlage zu optimieren. Hierbei wird hauptsächlich durch Optimierung der Betriebspunkte auf minimale Schallemission hingearbeitet. Hierfür werden Betriebspunkte an Versuchsanlagen bestimmt, die eine minimale Emission aufweisen und die Windenergieanlagen im Betrieb so gesteuert. Im Wesentlichen werden hierdurch die Rotordrehzahl und der Pitchwinkel angepasst.

Die US20070031237A1 z.B. zeigt ein Regelkonzept für eine optimierte Schallemission auf Basis von Mikrophonen im Nahfeld von Windenergieanlagen eines kompletten Windparks. Diese kann ein Fernfeld des Schalls durch mathematische Modelle ableiten. Der Windpark kann entsprechend auf die tatsächlichen Messungen durch die Mikrophone optimiert werden. Allerdings bezieht sich diese Messung nicht auf den direkten Schallerzeuger, nämlich den Rotor bzw. das Rotorblatt. Die Schallemission wird lediglich in der Umgebung des Schallerzeugers gemessen und daraus Rückschlüsse gezogen,

US 2017/191464 A1 ist ein weiteres relevantes Dokument des Standes der Technik.

Bisher wurde die Einhaltung der Schallemission durch eine Steuerung basierend auf vorheriger Bestimmung der maximalen Schallemission durchgeführt. Das Potential einer statischen oder dynamischen Optimierung der Windenergieanlagen im Betrieb wurde soweit nicht genutzt.

Es ist daher vorteilhaft, eine Einrichtung und eine Methode zur Verfügung zu stellen, die die vorgenannten Nachteile vermeidet und eine bessere Detektion von Schallemissionen an Rotorblättern von Windkraftanlagen ermöglicht und einen optimierten Betrieb einer Windkraftanlage erlaubt, bei dem vorteilhafterweise eine Abschaltung, also der ungünstigste Fall im Betrieb, nur in Ausnahmefällen, wenn unvermeidlich, erfolgt.

### ZUSAMMENFASSUNG

In einem ersten Aspekt gemäß Anspruch 1 wird daher ein Messeinrichtung zur Bestimmung von Schallemissionen eines mehrerer Rotorblätter einer Windkraftanlage offenbart. Die Messeinrichtung hat dabei mindestens einen Sensor, vorzugsweise mindestens zwei Sensoren, die dazu angepasst sind, Schwingungen an einem oder mehreren Rotorblättern zu detektieren und ein Ergebnis als Signal zur Verfügung zu stellen. Der mindestens eine Sensor ist dabei flächenbündig mit der Oberfläche der Rotorblätter angebracht.

In einem weiteren Aspekt gemäß Anspruch 6 der vorliegenden Anmeldung wird ein Rotorblatt einer Windkraftanlage mit einer Messeinrichtung nach einem oder mehreren Aspekten der Anmeldung offenbart, wobei die Messeinrichtung dazu ausgelegt ist, gemessene und analysierte Daten an eine Kontrolleinrichtung zu übermitteln.

Ein weiterer Aspekt gemäß Anspruch 8 offenbart ein Verfahren zur Bestimmung von Schallemissionen an einer oder mehreren Teiloberflächen einer Rotorblattoberfläche einer Windkraftanlage (WKA). Das Verfahren kann unter anderem eine Bestimmung von Schwingungen an einer oder mehreren Teiloberflächen der Rotorblattoberflächen beinhalten. Es kann weiter eine Auswertung der an der einen oder mehreren Teiloberflächen bestimmten Schwingungen beinhalten und eine nachfolgende Analyse, welcher Frequenzbereich Schallwellen erzeugt und als eine Schallquelle auf der Rotorblattoberfläche wirkt. Weiter kann die Stärke einer der berechneten bzw. bestimmten Schallquellen mit vorbestimmten Werten verglichen werden und, wenn erforderlich, darauffolgend Einleiten entsprechender Maßnahme an der WKA durch das Verfahren durchgeführt werden.

In noch einem weiteren Aspekt gemäß Anspruch 11 der Anmeldung wird eine Windkraftanlage mit einer Messeinrichtung gemäß Aspekten der Anmeldung offenbart.

### KURZE BESCHREIBUNG DER ZEICHNUNGEN

In den die Offenbarung erläuternden Figuren zeigt:
- Fig.1a:: ein Rotorblatt, gemäß einer oder mehrerer Ausführungsformen, mit eingelassenen Sensoren in Seitenansicht;
- Fig. 1b:: ein Rotor einer WKA gemäß einer oder mehrerer Ausführungsformen
- Fig. 2:: Rotor mit Schallemissionsquellen an Blattoberflächen und Einfluss auf Wohngebäude; und
- Fig. 3: Einen Ablaufplan einer oder mehrerer Ausführungsformen des Verfahrens.

### BESCHREIBUNG DER AUSFÜHRUNGSFORMEN

Bisher wurden die Schallquellen nicht direkt auf dem Rotorblatt gemessen. Eine lokale Messung ermöglicht ein viel detaillierteres Bild der Schallquellen für eine Regelung zur Unterdrückung von Schallemissionen und deren Ausbreitung. Zudem können durch die Kenntnis der Schallquellen intelligentere Regelkonzepte zur Schallreduktion entwickelt werden.

Die Lokalisation von Schallquellen kann auch eine erleichterte Wartung und Abstellung der Schallquelle durch Reparaturmaßnahmen ermöglichen, da sich die Suche wesentlich einfacher gestaltet..

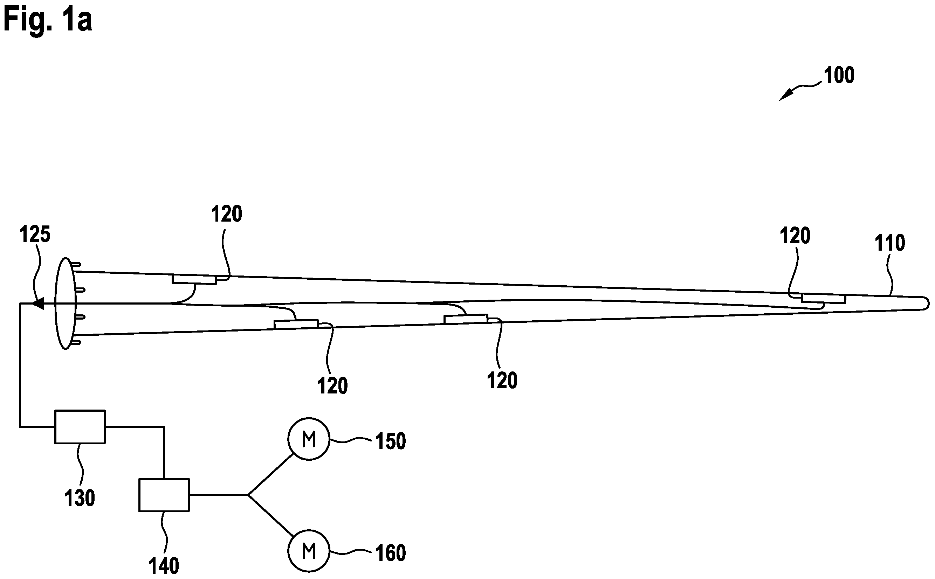

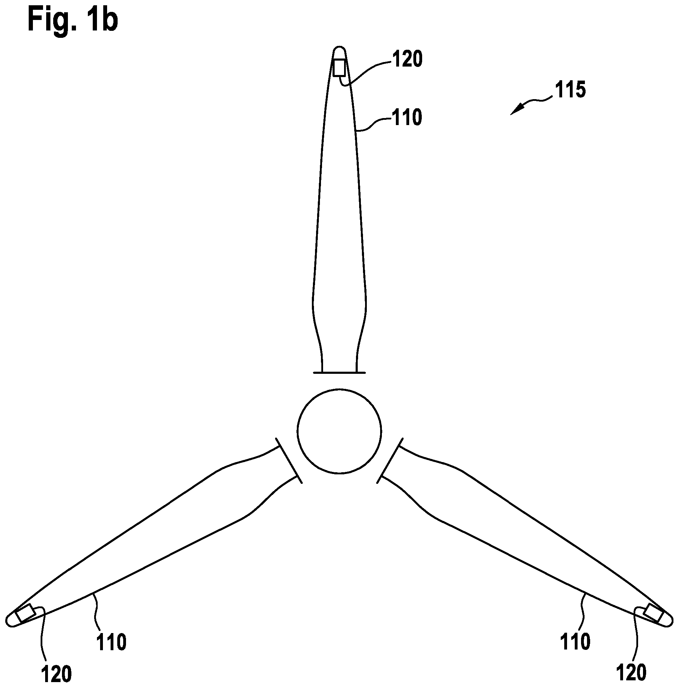

In einem ersten Aspekt wird daher eine Messeinrichtung zur Bestimmung von Schallemissionen eines oder mehrerer Rotorblätter einer Windkraftanlage offenbart. Die Messeinrichtung (Fig. 1a) kann dabei mindestens einen Sensor 120 enthalten, der dazu angepasst ist, Schwingungen an einem oder mehreren Rotorblättern 110 zu detektieren und ein Ergebnis als elektronisch verarbeitbares Signal 125 zur Verfügung zu stellen; wobei der mindestens eine Sensor 120 flächenbündig mit einer Oberfläche des oder der Rotorblätter 110 angebracht ist. Vorzugsweise werden in einem Rotorblatt mindestens zwei Sensoren, vorzugsweise Drucksensoren, eingebaut. Da die Sensoren durch ihre Bauart günstig und betriebssicher sind, können vorzugsweise auch mehr als zwei Sensoren in den Rotorblättern angebracht werden, was die Messgenauigkeit erhöht. Fig. 1b zeigt einen Rotor 115, mit drei Rotorblättern 115. Drucksensoren 120 sind an den Spitzen jedes Rotorblattes eingelassen.

Durch den Einsatz von Drucksensoren an der Blattoberfläche von Windenergieanlagen können die Schallquellen lokal vermessen werden. Typischerweise werden hier Drucksensoren, welche relevante Frequenzbereiche abdecken, in der Nähe der Blatthinterkante und der Blattspitze installiert, da sich hier die dominanten Schallquellen einer Windenergieanlage befinden. Alternativ können Mikrophone benutzt werden. Die Mikrophone können zusätzlich zu den Drucksensoren angeordnet werden oder anstelle dieser. Die weiterverarbeitenden Schaltungen und Einrichtungen sind darauf ausgelegt, auch mit den Signalen, die von den Mikrophonen ausgegeben werden, zu arbeiten.

In einer weiteren Ausführungsform wird eine Messeinrichtung gemäß weiterer Aspekte der Anmeldung offenbart. Insbesondere kann der Sensor für die Messeinrichtung ein faseroptischer Drucksensor sein.

Durch die exponierte Lage der Drucksensoren auf den Rotorblättern sind diese extremen Umgebungsbedingungen und Belastungen ausgesetzt. Hierbei können vorteilhafterweise faseroptische Drucksensoren eingesetzt werden. Faseroptische Drucksensoren als solches sind bekannt und werden beispielsweise in der DE 10 2014 210 949 A1 offenbart.

Diese faseroptischen Sensoren haben den weiteren Vorteil, dass sie inhärent elektro-magnetische Kompatibilität aufweisen, lange Übertragungswege der Signale ohne Störungen durch, beispielsweise, elektromagnetische Felder zulassen, sehr leicht sind, nicht korrodieren, und eine hohe Robustheit gegenüber weiteren Umwelteinflüssen, wie Feuchtigkeit, Temperatur, Überdruck, zeigen.

Der faseroptische Drucksensor kann vorzugsweise oberflächenbündig in das Rotorblatt eingelassen werden, um möglichst wenig Einfluss auf die Aerodynamik und Aeroakustik des Rotorblatts zu nehmen.

In einer weiteren Ausführungsform wird eine Messeinrichtung offenbart, wobei der mindestens eine Sensor an einer Blattspitze und/oder an einer Blatthinterkante angebracht sein kann. Vorteilhafterweise können Drucksensoren, welche den relevanten Frequenzbereich abdecken, in der Nähe der Blatthinterkante und der Blattspitze installiert werden. Die dominanten Schallquellen einer Windenergieanlage befinden sich vorzugsweise in diesen Bereichen.

In einem anderen Aspekt der Anmeldung wird eine Messeinrichtung gemäß einem oder mehrerer weiterer Aspekte der Anmeldung offenbart, wobei die Messeinrichtung eine Datenverarbeitungseinrichtung enthalten kann. Die Datenverarbeitungseinrichtung kann dazu angepasst sein, das Signal des Sensors auf Schwingungen zu analysieren. Die Datenverarbeitungseinrichtung kann einen Eingang zur Entgegennahme von optischen Daten haben. Vorzugsweise werden die Daten von den optischen Sensoren über optische Leiter an die Datenverarbeitungseinrichtung übertragen.

In einer weiteren Ausführungsform der Messeinrichtung gemäß einem oder mehrerer weiterer Aspekte der Offenbarung, kann die Datenverarbeitungseinrichtung dazu angepasst sein, Schallemissionen an der Rotorblattoberfläche zu bestimmen. Die Datenverarbeitungseinrichtung der Messeinrichtung kann somit eine rechnergestützte Analyseeinheit beinhalten. Diese Analyseeinheit kann dazu ausgelegt sein, mit verschiedenen Algorithmen die von den Sensoren erhaltenen Daten auszuwerten und auf bestimmte Frequenzen hin zu analysieren.

Eine weitere Ausführungsform gemäß einem oder mehrerer Aspekte der Anmeldung betrifft eine Messeinrichtung, wobei die Datenverarbeitungseinrichtung weiter dazu angepasst sein kann, einen Punkt bzw. Ort der Schallemissionen an der Rotorblattoberfläche zu bestimmen. Vorteilhafterweise kann die Datenverarbeitungseinrichtung der Messeinrichtung so angepasst sein, dass sich aus den Daten verschiedener Sensoren (mehr als ein Sensor) bestimmen lässt, wo auf dem Blatt Quellen für Schallemissionen liegen können.

Entsprechend einem weiteren Aspekt der Anmeldung kann die Datenverarbeitungseinrichtung in der Messeinrichtung weiter dazu angepasst sein, ein Fernfeld der Schallemissionen in einer vorbestimmten Entfernung von der Windkraftanlage zu bestimmen. Das Verhalten der Schallausbreitung in einer entsprechenden Entfernung, z.B. wenn sich die Windkraftanlagen in der Nähe von Wohneinheiten befinden, kann so bestimmt werden.

Ein Einbezug von Windrichtung, Windgeschwindigkeit, WEA-Azimut liefert eine Schallemissionsrose um WEA.

Durch die Messung, zum Beispiel eine exakte Messung, von Schallquellen mittels der Sensoren und/oder Mikrophonen kann die Windenergieanlage in Bezug auf Schallemission geregelt und nicht nur gesteuert werden. Hierdurch ergeben sich große Potentiale im Betrieb der Windenergieanlage und ganzer Parks, da im Speziellen, in stark besiedelten Gebieten, eine Abregelung der Leistung und damit eine Verminderung des AEPs dominant durch Schallrestriktionen erfolgen kann.

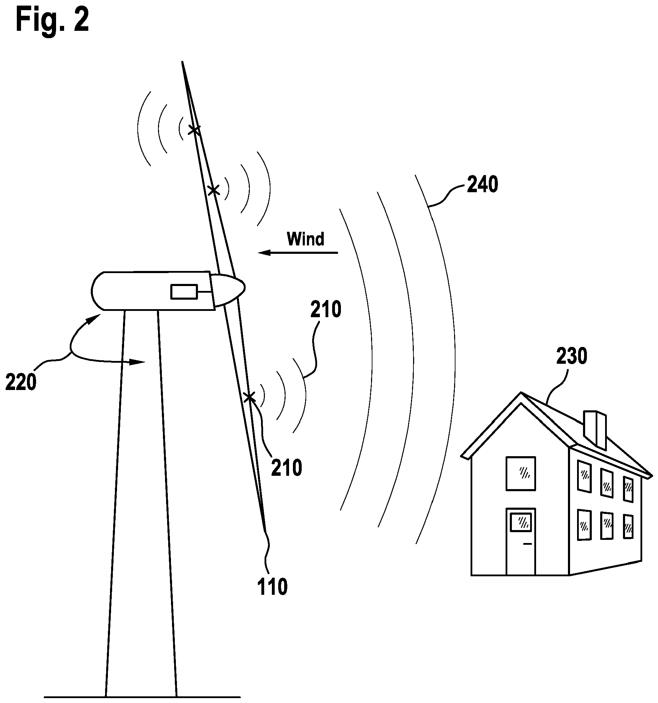

Fig. 2 zeigt eine Windkraftanlage, bei der sich auf den Rotorblättern Schallquellen 210 befinden. Diese können durch z.B. durch Schäden an der Blattoberfläche oder einfach durch Teilschwingungen von Oberflächenbereichen entstehen. Ein Rotorblatt als solches ist keine starre Einrichtung, sondern kann Schwingungsmoden an verschiedenen Stellen haben. Wohngebäude 230 liegt in einem Fernfeld und wird von Schallwellen 240 getroffen. Wenn berechnet wird, dass ein Fernfeld des Schalls am Gebäude 230 zu hoch ist (es existieren gesetzliche Vorgaben, die WKA's erfüllen müssen) werden entsprechende Maßnahmen eingeleitet, die der Beschallung entgegenwirken.

So kann der Turm der WKA soweit aus dem Wind gedreht werden 220, dass ein berechnetes Fernfeld des Schalls nicht mehr auf das Wohngebäude trifft oder zumindest nur in abgeschwächter Form. Durch eine Verstellung der Winkel der Rotorblätter kann ebenso ein entsprechender Effekt erreicht werden. Eine Drehzahlverminderung des Rotors der Anlage kann ebenso als Maßnahme zur Verminderung der Schallemissionen in Betracht gezogen werden. Dazu kann entsprechend eine Last am Generator verändert werden.

Gleichzeitig kann ermöglicht werden, dass diese Korrekturmassnahme nur soweit durchgeführt wird, dass noch möglichst viel Windenergie durch die Anlage erzeugt wird. Somit ermöglicht die vorliegende Anmeldung eine Optimierung jeder einzelnen Anlage.

Zudem können Anlagen noch besser überwacht und, bei stochastisch auftretenden starken Schallquellen durch z.B. Schäden, unmittelbar Abstellmaßnahmen eingeleitet werden. Ändern sich beispielsweise plötzlich Schallemissionen bei sonst gleichen oder ähnlichen Umgebungsbedingungen, kann das ein Anzeichen für einen Defekt an Blättern der WKA oder an der WKA selbst sein.

Ein weiterer Aspekt der vorliegenden Anmeldung betrifft ein Rotorblatt einer Windkraftanlage mit einer Messeinrichtung nach einem der vorhergehenden Aspekte. Die Messeinrichtung kann vorteilhafterweise dazu ausgelegt sein, gemessene und analysierte Daten an eine Kontrolleinrichtung zu übermitteln. Eine solche Kontrolleinrichtung muss nicht notwendigerweise in der Windkraftanlage selbst vorhanden sein, sondern kann auch außerhalb angeordnet sein. Die Messdaten können von der Messeinrichtung über bekannte Datenübertragungsverfahren an die Kontrolleinrichtung übermitteln.

Beispielsweise kann eine Windkraftanlage, die eine erfindungsgemäße Messeinrichtung aufweist, die ermittelten Werte an direkt benachbarte Anlagen übertragen, die keine dementsprechende Messeinrichtung haben. Vorteilhafterweise geschieht eine Übertragung der Daten lediglich an Anlagen vorzugsweise gleicher oder ähnlicher Bauart, bei denen man davon ausgehen kann, dass sie bei ähnlichen Wind- oder Betriebsverhältnissen auch ähnliche Schallemissionen produzieren.

Es ist anzustreben, dass jeder Rotor seine eigene Sensorbestückung und somit seine eigene Messeinrichtung hat. Dadurch kann eine Regelung jeder einzelner WKA völlig unabhängig von anderen Anlagen geschehen.

Ein weiterer Aspekt der vorliegenden Anmeldung offenbart ein Rotorblatt einer Windkraftanlage mit einer Messeinrichtung nach einem oder mehrerer Aspekte, wobei die Kontrolleinrichtung 140 der Messeinrichtung dazu ausgelegt sein kann, eine Winkelverstellung des Rotorblattes zu kontrollieren und solange Parameter der Windkraftanlage, beispielsweise einen Pitchwinkel des Blattes, zu verändern, bis vorbestimmte Anforderungen bezüglich Schallemission erreicht sind oder wieder erreicht sind.

Im Rotorblatt, siehe Fig. 1a, wird das Signal 125 von den bündig mit der Rotorblattoberfläche eingelassenen Sensoren 120 bevorzugt über optische (faser-) Kabel zu der Auswerteeinheit geleitet und mittels Algorithmen analysiert. Ergebnisse werden an Kontrolleinrichtung 140 übertragen, die dann entsprechend in der Lage sein kann, Aktoren wie z.B. 150 (Blattverstellwinkel) oder 160 (Rotor richtung) anzusteuern. Die Kontrolleinrichtung 140 kann auch in der Lage sein, wenn die Anforderungen an Schallemissionen nicht anders zu erfüllen sind, eine Anlagenabschaltung vorzunehmen.

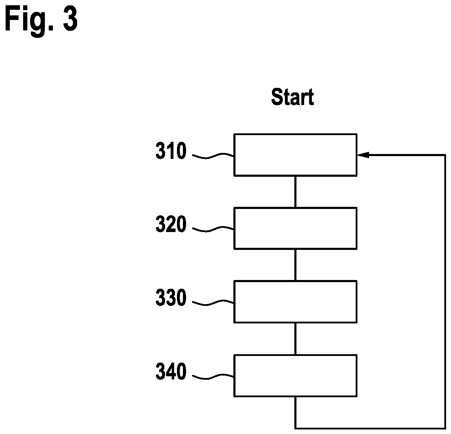

In einem weiteren Aspekt der Anmeldung, siehe Fig. 3 wird ein Verfahren zur Bestimmung von Schallemissionen an einer oder mehreren Teiloberflächen einer Rotorblattoberfläche einer Windkraftanlage offenbart.

Das Verfahren kann unter anderem beinhalten: Eine Bestimmung 310 von Schwingungen an einer oder mehreren Teiloberflächen der Rotorblattoberflächen. Eine Auswertung 320 der an der einen oder mehreren Teiloberflächen bestimmten Schwingungen und eine anschließende Analyse 330 können erfolgen, ob ein bestimmter Schwingungs-/Frequenzbereich Schallwellen erzeugt und auf der Rotorblattoberfläche als eine Schallquelle wirkt.

Ein Vergleichen 340 der Stärke einer ermittelten Schallquelle mit vorbestimmten Werten kann vorgenommen werden. Werden vorgegebene Werte hinsichtlich einer Stärke einer Schallabstrahlung übertroffen, kann darauffolgend das Einleiten einer entsprechenden Maßnahme an der WKA initiiert werden, wie etwa ein Verstellen von Rotorblattwinkeln oder das aus dem Wind drehen des Rotors

In einer weiteren Ausführungsform wird ein Verfahren Bestimmung von Schallemissionen nach einem oder mehreren vorgenannter Aspekte offenbart, wobei Maßnahmen, die ergriffen werden können, beispielsweise eine Verstellung der Winkel der Rotorblätter oder eine Abschaltung der WKA sein können.

Das Ziel ist es, eine Abschaltung der Anlage und somit einen Ausfall an produzierter Energie zu vermeiden. Daher ist die Abschaltung der Anlage nur dann eine Option, wenn Optimierungen einer Schallabstrahlung der Rotorblätter oder der Windkraftanlage nicht zum Erfolg führt und dauerhafte vorbestimmte Grenzwerte überschritten werden.

In einem anderen Aspekt der Anmeldung kann das Verfahren zur Bestimmung von Schallemissionen gemäß einem oder mehrerer genannter Aspekte kontinuierlich durchgeführt werden um eine dauerhafte Schalloptimierung der Windkraftanlage zu erreichen. Wenn also eine besonders schallarme Betriebsposition der Anlage, z.B. durch Änderung der Blattwinkelstellung erreicht ist, werden die von den Sensoren gelieferten Daten weiterhin analysiert und ausgewertet. Wird im Laufe der Zeit festgestellt, dass sich die Schallabstrahlung der Windkraftanlage verschlechtert, also vorgegebene maximale Werte überschritten werden, werden wiederum Maßnahmen zur Reduzierung ergriffen, also beispielsweise wieder der Blattwinkel verstellt.

Erst wenn sich durch Regelmaßnahmen keine Verbesserung der Schallemission ergibt, beispielsweise bei Schäden an der Anlage, z.B. an den Rotorblättern, und dauerhaft Grenzwerte überschritten werden, wird die entsprechende Windkraftanlage heruntergefahren.

Der Vorteil liegt darin, dass durch die erfindungsgemäße Messeinrichtung individuell einzelne Anlagen betrachtet werden können, ohne den Ertrag anderer Anlagen zu beeinträchtigen, wie das bisher durch eine generelle Messung über z.B. Mikrofone im Fernfeld der Anlagen der Fall war.

Ein weiterer Aspekt der vorliegenden Anmeldung offenbart eine Windkraftanlage mit einer Messeinrichtung gemäß einem oder mehrerer der vorgenannten Aspekte und Ausführungsformen.

In noch einem weiteren Aspekt, kann die Windkraftanlage gemäß weiterer Aspekte der Erfindung ein Computerprogrammprodukt enthalten, das in einen Speicher einer digitalen Rechenvorrichtung, geladen werden kann und Softwarecodeabschnitte beinhaltet, mit denen Schritte gemäß einem oder mehreren der übrigen Aspekte ausgeführt werden können, wenn das Computerprogrammprodukt auf der Rechenvorrichtung läuft. Weiterhin wird ein Computerprogrammprodukt vorgeschlagen, das direkt in einen Speicher, zum Beispiel einen digitalen Speicher einer digitalen Rechenvorrichtung geladen werden kann. Eine Rechenvorrichtung kann neben eines oder mehrerer Speicher, eine CPU, Signaleingänge und Signalausgänge, sowie weitere für eine Rechenvorrichtung typische Elemente enthalten. Eine Rechenvorrichtung kann Teil einer Auswerteeinheit sein, oder die Auswerteeinheit kann Teil einer Rechenvorrichtung sein. Ein Computerprogramprodukt kann Softwarecodeabschnitte beinhalten, mit denen die Schritte der Verfahren der hier beschriebenen Ausführungsformen zumindest teilweise ausgeführt werden, wenn das Computerprogrammprodukt auf der Rechenvorrichtung läuft. Dabei können jegliche Ausführungsformen des Verfahrens durch ein Computerprogrammprodukt ausgeführt werden.

Die vorliegende Offenbarung offenbart eine Messeinrichtung, die Schallemissionen von Rotorblättern im Nah- und Fernfeld bestimmen kann. Faseroptische Drucksensoren werden verwendet, die vorzugsweise bündig mit der Blattoberfläche in die Rotorblätter eingesetzt werden.

Die vorgestellte Messeinrichtung und Methode ermöglicht diverse Vorteile für Windkraftanlagen:

Die Regelung der Windenergieanlage kann in Bezug auf Schallemission an die tatsächliche, zugelassene Höchstgrenze durch Messung des abgestrahlten Schalls angepasst werden.

Die Messung der Schallemission kann durch lokale Druckmessung (Aerodynamik und Aeroakustik) an den Rotorblättern im extremen Nahfeld erfolgen und nicht mehr durch entfernt stehende Mikrofone. Somit kann die Messung und die Grundlage für weitere Berechnungen genauer als bisher werden, da direkt die Schallquellen auf den Blättern des Rotors ermittelt werden können.

Die hochauflösende Detektion der Schallquellen auf einem einzelnen Rotorblatt und sogar Segmenten des Rotorblatts und damit optimierte Regelkonzepte für Schallreduktion und Ableitung des Fernfeldes können mit der erfindungsgemässen Messeinrichtung ermöglicht werden. In anderen Worten können optimierte Werte ermittelt werden, die es zulassen, dass die Windenergieanlage den gesetzlichen Bedingungen hinsichtlich des Lärmschutzes genügt und gleichzeitig eine optimierte Leistungsabgabe ins Stromnetz erfolgt. Dadurch, dass dies kontinuierlich erfolgt, kann eine Optimierung auch bei sich ändernden Parametern erreicht werden.

Weiter kann die erfindungsgemäßen Messeinrichtung eine Erkennung von unerwarteten Schallquellen durch z. B. Erosion und strukturellen Schäden ermöglichen und damit eine verbesserte Überwachung des Zustands von Rotorblättern.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Messeinrichtung zur Bestimmung von Schallemissionen an einer oder mehreren Teiloberflächen an einem oder mehreren Rotorblättern (110) einer Windkraftanlage, umfassend:
mindestens einen Drucksensor und/oder ein Mikrophon (120) an mindestens einem der Rotorblätter (110);
wobei der mindestens eine Drucksensor und/oder das Mikrophon (120) flächenbündig mit einer Oberfläche der Rotorblätter (110) angebracht ist;
eine Datenverarbeitungseinrichtung (130), die dazu angepasst ist, das Signal des mindestens einen Drucksensors und/oder Mikrophons (120) auf Schallemissionen zu analysieren;
**dadurch gekennzeichnet, dass**
die Datenverarbeitungseinrichtung (130) weiter dazu angepasst ist, ein Fernfeld der Schallemissionen in einer vorbestimmten Entfernung von der Windkraftanlage unter Einbezug von Windrichtung, Windgeschwindigkeit und Azimut der Windkraftanlage zu bestimmen.

2. Messeinrichtung nach Anspruch 1, wobei der mindestens eine Drucksensor und/oder Mikrophon (120) angepasst ist, Schallemission an einem oder mehreren der Rotorblätter (110) zu detektieren.

3. Messeinrichtung nach Anspruch 1 oder 2, wobei der Drucksensor (120) ein faseroptischer Drucksensor ist.

4. Messeinrichtung nach einem der vorhergehenden Ansprüche, wobei der mindestens eine Drucksensor und/oder Mikrophon (120) an einer Blattspitze und/oder an einer Blatthinterkante angebracht ist.

5. Messeinrichtung nach einem der vorhergehenden Ansprüche, wobei die Datenverarbeitungseinrichtung (130) dazu angepasst ist, Schallemissionen an der Rotorblattoberfläche zu bestimmen.

6. Rotorblatt einer Windkraftanlage mit einer Messeinrichtung nach einem der vorhergehenden Ansprüche, wobei die Messeinrichtung dazu ausgelegt ist, gemessene und analysierte Daten an eine Kontrolleinrichtung (140) zu übermitteln.

7. Rotorblatt einer Windkraftanlage mit einer Messeinrichtung nach einem der vorhergehenden Ansprüche, wobei die Kontrolleinrichtung dazu ausgelegt ist, eine Winkelverstellung des Rotorblattes (110) zu kontrollieren und solange einen Pitchwinkel des Rotorblattes (110) zu verändern oder einen Winkel von Rotor (125) gegenüber auftreffendem Wind zu verändern, bis vorbestimmte Anforderungen bezüglich Schallemission erreicht sind.

8. Verfahren zur Bestimmung von Schallemissionen an einer oder mehreren Teiloberflächen einer Rotorblattoberfläche einer Windkraftanlage mit einer Messeinrichtung gemäß einem der Ansprüche 1 bis 6, umfassend:
Bestimmen (310) von Schallemission an einer oder mehreren Teiloberflächen der Rotorblattoberflächen mittels wenigstens eines Drucksensors und/oder Mikrophons;
Auswerten (320) der an der einen oder mehreren Teiloberflächen bestimmten Schallemission;
Bestimmen eines oder mehrerer Sollwerte für Betriebsparameter basierend auf der ausgewerteten Schallemission; und
Steuerung der Windenergieanlage basierend auf dem einen oder mehreren Sollwerten.

9. Verfahren zur Bestimmung von Schallemissionen nach Anspruch 8, wobei Maßnahmen eine Verstellung der Rotorblätter (110), eine Drehzahlreduktion des Rotors oder eine Abschaltung der Windkraftanlage sein können.

10. Verfahren zur Bestimmung von Schallemissionen nach einem der Ansprüche 8 oder 9, wobei die Verfahrensschritte kontinuierlich durchgeführt werden um eine dauerhafte Schalloptimierung der Windkraftanlage zu erreichen.

11. Windkraftanlage mit einer Messeinrichtung gemäß den vorstehenden Ansprüchen.

12. Windkraftanlage gemäß Anspruch 11, weiterhin umfassend:
ein Computerprogrammprodukt, das in einen Speicher einer digitalen Rechenvorrichtung, geladen werden kann und Softwarecodeabschnitte umfasst, mit denen die Schritte gemäß einem der Ansprüche 8 bis 10 ausgeführt werden, wenn das Computerprogrammprodukt auf der Rechenvorrichtung läuft.

## Claims

1. A measuring device for determining sound emissions on one or more partial surfaces on one or more rotor blades (110) of a wind turbine, comprising:
at least one pressure sensor and/or a microphone (120) on at least one of the rotor blades (110);
wherein the at least one pressure sensor and/or the microphone (120) is mounted flush with a surface of the rotor blades (110);
a data processing device (130) which is configured to analyze the signal of the at least one pressure sensor and/or microphone (120) for sound emissions;
**characterized in that** the data processing device (130) is further configured to determine a far field of the sound emissions at a predetermined distance from the wind turbine while taking wind direction, wind speed, and the azimuth of the wind turbine into account.

2. The measuring device according to claim 1, wherein the at least one pressure sensor and/or microphone (120) is configured to detect sound emission at one or more of the rotor blades (110) .

3. The measuring device according to claim 1 or 2, wherein the pressure sensor (120) is a fiber optic pressure sensor.

4. The measuring device according to any one of the preceding claims, wherein the at least one pressure sensor and/or microphone (120) is attached to a blade tip and/or to a blade trailing edge.

5. The measuring device according to any one of the preceding claims, wherein the data processing device (130) is configured to determine sound emissions at the rotor blade surface.

6. A rotor blade of a wind turbine with a measuring device according to any one of the preceding claims, wherein the measuring device is designed to transmit measured and analyzed data to a control device (140).

7. A rotor blade of a wind turbine with a measuring device according to any one of the preceding claims, wherein the control device is designed to control an angle adjustment of the rotor blade (110) and to change a pitch angle of the rotor blade (110) or to change an angle of the rotor (125) relative to incident wind until predetermined requirements with regard to sound emission are met.

8. A method for determining sound emissions on one or more partial surfaces of a rotor blade surface of a wind turbine with a measuring device according to any one of claims 1 to 6, comprising:
determining (310) sound emission at one or more partial surfaces of the rotor blade surfaces by means of at least one pressure sensor and/or microphone;
evaluating (320) the sound emission determined at the one or more partial surfaces;
determining one or more setpoints for operating parameters based on the evaluated sound emission; and
controlling the wind turbine on the basis of one or more setpoints.

9. The method for determining noise emissions according to claim 8, wherein measures can be an adjustment of the rotor blades (110), a reduction in the speed of the rotor, or a shutdown of the wind turbine.

10. The method for determining noise emissions according to any one of claims 8 or 9, wherein the method steps are carried out continuously in order to achieve permanent noise optimization of the wind turbine.

11. A wind turbine with a measuring device according to the preceding claims.

12. The wind turbine according to claim 11, further comprising: a computer program product which can be loaded into a memory of a digital computing device and comprises software code portions that carry out the steps according to any one of claims 8 to 10 when the computer program product is running on the computing device.

## Revendications

1. Dispositif de mesure pour déterminer les émissions sonores sur une ou plusieurs surfaces partielles sur une ou plusieurs pales de rotor (110) d'une éolienne, comprenant :
au moins un capteur de pression et/ou un microphone (120) sur au moins l'une des pales de rotor (110) ;
dans lequel l'au moins un capteur de pression et/ou le microphone (120) sont montés au ras d'une surface des pales de rotor (110) ;
un dispositif de traitement de données (130) qui est adapté pour analyser le signal de l'au moins un capteur de pression et/ou microphone (120) pour les émissions sonores ;
**caractérisé en ce que**
le dispositif de traitement de données (130) est en outre adapté pour déterminer un champ lointain d'émissions sonores à une distance prédéterminée de l'éolienne, avec prise en compte de la direction du vent, de la vitesse du vent et de l'azimut de l'éolienne.

2. Dispositif de mesure selon la revendication 1, dans lequel l'au moins un capteur de pression et/ou microphone (120) est adapté pour détecter une émission sonore sur l'une ou plusieurs des pales de rotor (110).

3. Dispositif de mesure selon la revendication 1 ou 2, dans lequel le capteur de pression (120) est un capteur de pression à fibre optique.

4. Dispositif de mesure selon l'une des revendications précédentes, dans lequel l'au moins un capteur de pression et/ou microphone (120) est monté à une pointe de pale et/ou à un bord de fuite de pale.

5. Dispositif de mesure selon l'une des revendications précédentes, dans lequel le dispositif de traitement de données (130) est adapté pour déterminer les émissions sonores sur la surface de pale de rotor.

6. Pale de rotor d'une éolienne dotée d'un dispositif de mesure selon l'une des revendications précédentes, dans laquelle le dispositif de mesure est conçu pour transmettre des données mesurées et analysées à un dispositif de commande (140).

7. Pale de rotor d'une éolienne dotée d'un dispositif de mesure selon l'une des revendications précédentes, dans laquelle le dispositif de commande est conçu pour commander un réglage angulaire de la pale de rotor (110) et pour modifier un angle d'inclinaison de la pale de rotor (110) ou un angle du rotor (125) par rapport au vent incident jusqu'à ce que des exigences prédéterminées concernant les émissions sonores soient atteintes.

8. Procédé de détermination des émissions sonores sur une ou plusieurs surfaces partielles d'une surface de pale de rotor d'une éolienne avec un dispositif de mesure selon l'une des revendications 1 à 6, comprenant :
la détermination (310) de l'émission sonore sur une ou plusieurs surfaces partielles des surfaces de pale de rotor à l'aide d'au moins un capteur de pression et/ou microphone ;
l'évaluation (320) de l'émission sonore déterminée sur une ou plusieurs surfaces partielles ;
la détermination d'une ou de plusieurs valeurs de consigne pour des paramètres de fonctionnement sur la base de l'émission sonore évaluée ; et
la commande de l'éolienne sur la base de l'une ou des plusieurs consignes.

9. Procédé de détermination des émissions sonores selon la revendication 8, dans lequel les actions entreprises peuvent être un réglage des pales de rotor (110), une réduction de la vitesse du rotor ou un arrêt de l'éolienne.

10. Procédé de détermination des émissions sonores selon l'une des revendications 8 ou 9, dans lequel les étapes de procédé sont réalisées en continu afin d'obtenir une optimisation sonore permanente de l'éolienne.

11. Éolienne dotée d'un dispositif de mesure selon les revendications précédentes.

12. Éolienne selon la revendication 11, comprenant en outre : un produit programme informatique chargeable dans une mémoire d'un dispositif informatique numérique et comprenant des parties de code logiciel permettant d'exécuter les étapes selon l'une des revendications 8 à 10 lorsque le produit programme informatique est exécuté sur le dispositif informatique.
